# EUROPEAN PATENT APPLICATION

(11) **EP 4 597 814 A1**
(43) Date of publication of application: **06.08.2025**
(21) Application number: 24154874.2
(22) Date of filing: 31.01.2024
(51) Int. Cl.: H02M 1/32, H02M 7/483, H02M 1/00

(54) **CONVERTER AND A METHOD FOR CONTROLLING A CONVERTER**

(71) Applicant: Siemens Energy Global GmbH & Co. KG, 81739 München (DE)
(72) Inventor: Schön, Andre, 91058 Erlangen (DE); Strong, Blazej Edward, 90571 Schwaig (DE); Alvarez Valenzuela, Rodrigo Alonso, 90409 Nürnberg (DE)

(57) **Abstract**

The present invention relates to a converter (1) with a converter control (13). According to the invention, the converter control is configured to provide a voltage reference (Vref) having an amplitude and an angle, process said voltage reference to obtain a current reference (Iref) to control a converter current, replace said current reference by a current reference limit (Ilim) if said current reference exceeds said current reference limit, and to control said angle of said voltage reference to minimize a difference between said current reference and said current reference limit if said current reference exceeds the current reference limit.

## Description

The present invention relates to a converter with a converter control.

The increasing number of power electronics devices (such as HVDC, STATCOM) present in the electricity networks, as well as an operation of renewable energy devices application usage under relatively weak grid conditions has significantly increased the necessity for the implementation of so-called grid forming converters (i.e., converters operated in a grid forming mode). In the grid forming mode, the converter actively controls its frequency and voltage output.

In general, the known concepts to generate a synchronous voltage source that exhibits the desired grid forming properties are based on two key components: a software implementation of a swing equation to model the frequency behavior and inertia of a physical synchronous machine with a rotating space phasor, and a voltage controller for the voltage magnitude of that phasor.

One of the biggest constraints of a power electronic device in comparison to a physical synchronous generator is the limited current capability of the former. A power electronic device is not able to carry a current of a multiple of the nominal current value, even for a short time. Therefore, it may be necessary to limit the converter currents. However, especially under fault conditions, a current limitation may disrupt the grid forming capability of the converter. Moreover, it is in general hardly possible to foresee the conditions to which the system would restore after a fault.

The object of the invention is thus to propose an afore mentioned converter that allows reliable operation in a grid forming mode, in particular to regain grid forming functionality after a disrupting event as fast as possible while complying with the converter current capability.

The object is achieved by a converter according to claim 1.

According to the invention, the converter control is configured to provide a voltage reference having an amplitude and an angle, process said voltage reference to obtain a current reference to control a converter current, replace said current reference by a current reference limit if said current reference exceeds said current reference limit, and to control said angle of said voltage reference to minimize a difference between said current reference and said current reference limit if said current reference exceeds the current reference limit.

The converter control comprises a grid forming control system with an underlying current controller to limit the currents. The grid forming system further comprises a voltage controller emulating a behavior of an ideal voltage source with limited energy storage capability, e.g., a physical synchronous machine.

The control of the angle and the amplitude of the voltage reference allows to prevent the voltage angle (and possibly also its magnitude) to run away during the time when the converter current reference is limited. Moreover, controlling the machine angle to follow the quasi-stationary operating point of the system during e.g., Fault Ride Through (FRT), allows the system to resynchronize safely to a post-fault conditions.

When the voltage in the electrical network drops (e.g., because of AC faults) or the grid angle jumps (e.g., because of changing in the gird state or grid reconfiguration), the inertial behavior of the internal virtual voltage source usually reacts to that event very slowly. It may be assumed to be constant on a short time scale. The voltage difference at the input of virtual admittance is high, the current setpoint determined by that is also high and hits the converter capability limit at the input of underlying current controller leading to a current setpoint/reference limitation. The goal of the voltage control is to push the angle and/or magnitude of the internal virtual voltage source to a state, where the resulting current from the voltage difference over the virtual admittance is within the design limits and the grid forming control is restored. The active or reactive power can be prioritized during low voltage ride through.

The natural implementation of the corresponding control algorithm would be in d and q domain. Nevertheless, implementations in other components such as alpha beta or pps and nps are possible.

When the limited component of the current equals the current determined by virtual admittance, grid forming control is restored and the grid forming control loop is closed again. In this way not only the voltage source runaway is prevented, but also the restoration of the grid forming control is faster.

Preferably, the angle control limits the range of admissible voltage reference angles. In general, the limits can be set by directly setting limiting angles or indirectly, by setting an upper and a lower power reference limit for, e.g., a swing equation model of a physical rotating machine. The power reference limits can be processed by means of said electromechanical and/or electromagnetical model of the converter to move or to keep the voltage reference angles within the admissible limited range.

According to an embodiment, the upper reference limit is computed by means of a transfer function (that might in certain applications be a gain function) having as input a difference between the current reference and the current reference limit. For example, in case that the current reference is higher than the current reference limit, the power reference limit has a negative value. That means that the converter is controlled to withdraw power from the network and to set the voltage reference angle to operate accordingly.

Suitably, the converter control further comprises a virtual admittance module, receiving at its input said voltage reference, and providing at its output said current reference. Accordingly, the interface between the grid forming controllers and a current controller can be realized through a virtual admittance, which may be interpreted as a RL grid model with a defined short circuit level and X/R ratio. The virtual admittance module can selectively process the positive and negative sequence components of the signals. The virtual admittance module may comprise a combination of a linear and a non-linear transfer function. The transfer functions of the virtual admittance module can be implemented to act in the Laplace domain.

The converter control may further comprise a limitation module for replacing said current reference by a current reference limit if said current reference exceeds said current reference limit. The limitation module preferably receives at its input the output of the virtual admittance module and provides at its output a current value to be processed as an input to a current controller.

Correspondingly, the converter control may further comprise a current controller receiving at its input a difference between said current reference and a measured converter current and providing at its output a current controller output voltage. The current controller output voltage is further processed so that the corresponding voltage is generated by the converter valves. If the converter is a modular multilevel converter, then the current controller output voltage is used to determine its switching modules to be switched on.

Preferably, said voltage reference is a positive phase sequence voltage reference. Accordingly, the positive and negative sequent components of the signals (voltage and/or current) can be processed separately. This particularly increases the flexibility of the converter control.

The converter is preferably configured to stabilize an AC high-voltage (or, alternatively, a medium-voltage) grid. It may comprise converter arms. Each arm is connected to means to connect the respective converter arm to a phase of the network.

According to an embodiment the converter comprises controllable semiconductor switches of a switch-off type. The converter comprises an AC side to connect to an AC network and a DC side to be connected to a DC link or to an electrical energy storage device. The concept described herein can be used for an SVC frequency stabilizing device which is e.g., based on a B6 converter with ultracapacitors connected to the DC terminals. A B6 converter configuration is characterized by three converter phase branches each extending between the DC terminals. Each phase branch comprises two converter valves (thus six in total), wherein an AC terminal is arranged between the respective converter valves of every converter phase. The energy storage connected to the DC side of the converter enables several seconds of operation in active power range. When the voltage limits of the supercapacitor at the DC side are exceeded, the storage will be charged or discharged respectively, allowing the island operation of the SVC Frequency Stabilizer. The voltage setpoint can be calculated by an Automatic Voltage Regulator (AVR), which controls the voltage at the connecting point to the given reference. The speed of the response of the controller determines the stability of the converter during islanding condition. The active power of the frequency stabilizer in normal condition is zero. During frequency disturbances, the active power is injected/absorbed to counteract the frequency change.

The converter is preferably a modular multilevel converter. A modular multilevel converter (MMC) comprises a series of switching modules in each of the converter valves (sometimes also referred to as converter arms). Each of the switching modules comprises switch-off type semiconductor switches, like e.g., IGBT, and an energy store, like e.g., a capacitor. Every switching module can be individually controlled to provide certain module voltage at its terminals (e.g., the capacitor voltage or a zero voltage in case of a half-bridge module, or the capacitor voltage, a negative capacitor voltage or a zero voltage in case of a full-bridge module).

The invention further relates to a method for operating resp. controlling a converter according to the invention.

The object of the present invention is to provide such a method that allows reliable operation of the converter in a grid forming mode.

The object is achieved by a method according to claim 10.

Accordingly, the method comprises the steps of providing a voltage reference having an amplitude and an angle, processing said voltage reference to obtain a current reference to control a converter current, replacing said current reference by a current reference limit if said current reference exceeds said current reference limit, and if said current reference exceeds the current reference limit, controlling said angle of said voltage reference to minimize a difference between said current reference and said current reference limit.

The invention is explained below with reference to exemplary embodiments illustrated in the figures 1 to 4.
Figure 1 shows a schematic view of a converter according to an embodiment of the invention;
Figure 2 shows another schematic view of the converter of figure 1;
Figures 3 and 4 show schematic views of embodiments of a converter control for a converter according to the invention.

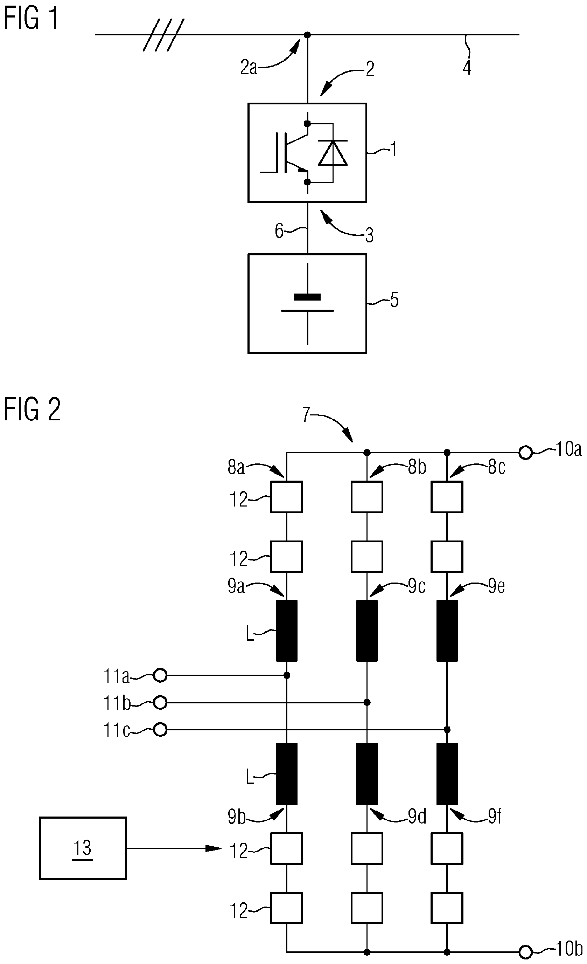

A converter 1 with an AC side 2 and a DC side 3 is depicted in figure 1. The converter 1 is a voltage source converter, in particular a modular multilevel converter (MMC). The AC side 2 of the converter 1 is connected to an AC grid 4 at a connecting point 2a. The DC side 3 of the converter is connected to an electrical energy storage device 5 via a DC link 6. The converter 1 is designed to stabilize the AC grid 4 by exchanging active and reactive power with the AC grid 4.

The MMC 7 shown in figure 2 comprises three phase branches 8a-c and six converter valves (also denoted as arm) 9a-f. Every converter arm 9a-f extends between one of the DC poles or terminals 10a,b, constituting a DC side of the converter 7, and one of the AC terminals 11a-c constituting an AC side of the converter 7. Each converter valve 9a-f comprises an arm inductance L and a number of switching modules 12 connected in series. The number of switching modules 12 in every converter arm 9a-f is in general arbitrary (not restricted to two per valve) and can be adapted to the given application. According to the example shown in figure 2 all switching modules 12 are so-called full-bridge switching modules. A proper control of the semiconductor switches of a given switching module 12 creates a positive, a negative or a zero voltage across its terminals. The converter 7 comprises a converter control 13 for controlling the operation of the converter 7.

The MMC 7 is suitable for grid stabilization applications (according to the configuration of figure 1). However, the present invention is also applicable to high-voltage direct current energy transmission (HVDC), e.g., using the MMC 7, wherein its DC side is connected to a DC transmission line. Particularly in HVDC applications each of the converter valves can comprise switching full-bridge switching modules, half-bridge switching modules, other switching module topologies or any combinations thereof.

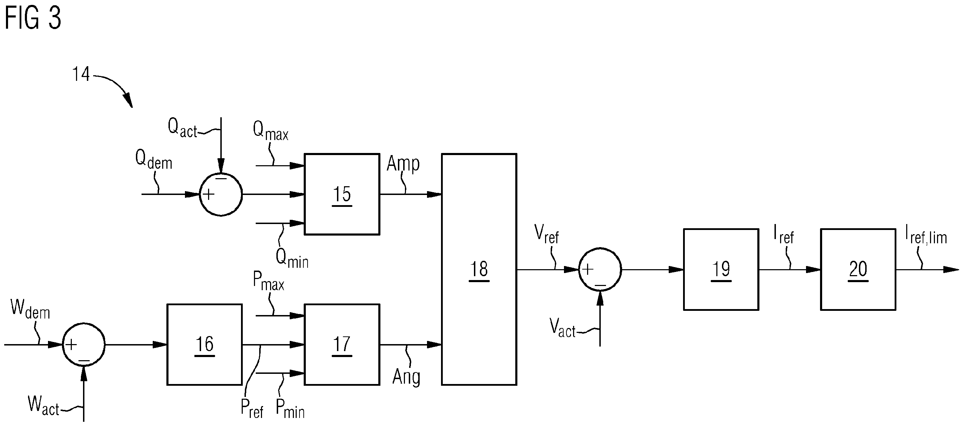

Figure 3 shows a converter control 14 suitable for the converter shown in any of the figures 1 or 2. The converter control 14 has a grid forming capability.

To obtain a voltage reference phasor Vref (or a positive sequence component of the voltage reference, VrefPPS) the converter control 14 performs the following steps.

An amplitude Amp of the voltage reference Vref is derived from a difference between a reactive power demand Qdem and an actual measured reactive power Qact by means of a reactive power control module 15 comprising an appropriate transfer function and using an upper and a lower limits Qmax, Qmin.

A difference between a converter energy demand Wdem and an actual measured converter energy Wact is provided to an energy control module 16 that provides at its output an active power reference Pref. The active power reference is further processed by means of a converter swing equation model module 17 that takes into account the electromechanical and electromagnetical properties of a rotating machine (and may be a complete, simplified or modified model) and provides at its output an angle Ang of the voltage reference Vref.

The angle Ang and the amplitude Amp are combined in a module 18 to obtain the voltage reference Vref.

A difference between the voltage reference Vref and a measured actual voltage Vact is provided as an input to a virtual admittance module 19. The virtual admittance module 19 processes its input by means of a transfer function to obtain a current reference Iref.

A current limitation module 20 replaces the current reference Iref by a current reference limit Ilim if the current reference Iref (respectively its amplitude) exceeds the current reference limit (amplitude) Ilim and provides the result Iref,lim to a current controller for further processing.

An upper and a lower power reference limit Pmax, Pmin are provided as an additional input to the converter swing equation model module 17 to limit the admissible values of the voltage reference angle Ang.

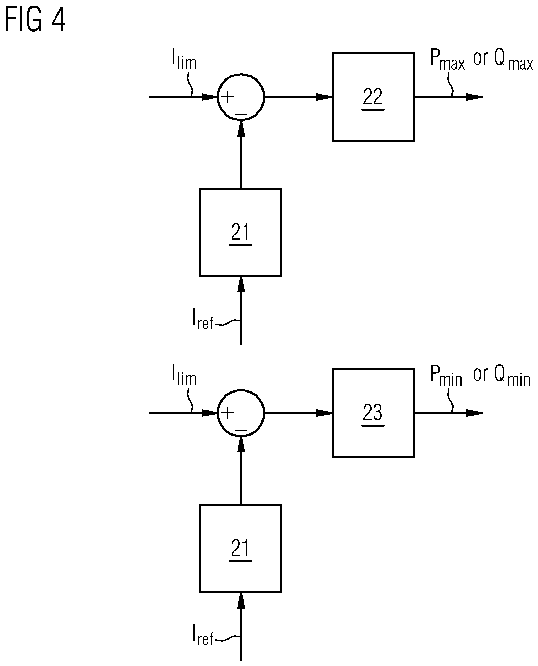

A possible approach to derive the power reference limits Pmin, Pmax is shown in figure 4.

An active and/or a reactive component Iref,d, Iref,q of the current reference Iref is provided by an extracting module 21. A first transfer function module 22 receives as input a difference between the current reference limit Ilim and the active component Iref,d and/or reactive component Iref,q and provides at its output the upper power reference limit Pmax and/or Qmax. A second transfer function module 23 receives as input a difference between a negative current reference limit Ilim and the active/reactive component Iref,d, Iref,q and provides at its output the lower power reference limit Pmin and/or Qmin.

## Claims

1. Converter (1) with a converter control (13), said converter control (13) being configured to
- provide a voltage reference (Vref) having an amplitude and an angle,
- process said voltage reference (Vref) to obtain a current reference (Iref) to control a converter current,
- replace said current reference (Iref) by a current reference limit (Ilim) if said current reference (Iref) exceeds said current reference limit (Ilim), and to
- control said angle of said voltage reference (Vref) to minimize a difference between said current reference (Iref) and said current reference limit (Ilim) if said current reference (Iref) exceeds the current reference limit (Ilim).

2. Converter (1) according to claim 1, wherein said angle control comprises limiting the range of admissible voltage reference angles.

3. Converter (1) according to claim 2, wherein said limiting is done by setting an upper and a lower power reference limit (Pmax, Pmin) for a converter power.

4. Converter (1) according to claim 3, wherein said upper power reference limit (Pmax) is computed by means of a transfer function of a difference between said current reference (Iref) and said current reference limit (Ilim).

5. Converter (1) according to any of the preceding claims, wherein the converter control (13) further comprises a virtual admittance module (19), receiving at its input said voltage reference (Vref), and providing at its output said current reference (Iref).

6. Converter (1) according to any of the preceding claims, wherein the converter control (13) further comprises a limitation module (20) for replacing said current reference (Iref) by a current reference limit (Ilim) if said current reference (Iref) exceeds said current reference limit (Ilim).

7. Converter (1) according to any of the preceding claims, wherein the converter control (13) further comprises a current controller receiving at its input a difference between said current reference (Iref) and a measured converter current (Iact), and providing at its output a current controller output voltage.

8. Converter (1) according to any of the preceding claims, wherein said voltage reference is a positive phase sequence voltage reference.

9. Converter (1) according to any of the preceding claims, wherein the converter (1) is a modular multilevel converter configured to stabilize an AC high-voltage grid.

10. Method for controlling a converter (1), the method comprising the steps of
- providing a voltage reference (Vref) having an amplitude and an angle,
- processing said voltage reference (Vref) to obtain a current reference (Iref) to control a converter current,
- replacing said current reference (Iref) by a current reference limit (Ilim) if said current reference (Iref) exceeds said current reference limit (Ilim), and
if said current reference (Iref) exceeds the current reference limit (Ilim), controlling said angle of said voltage reference (Vref) to minimize a difference between said current reference (Iref) and said current reference limit (Ilim) .
